# EUROPEAN PATENT SPECIFICATION

(11) **EP 1 286 406 B1**
(45) Date of publication and mention of the grant of the patent: **07.01.2009**
(21) Application number: 02014822.7
(22) Date of filing: 03.07.2002
(51) Int. Cl.: H01M 8/06, F17C 11/00, C01B 3/00

(54) **Metal hydride storage canister and its manufacture**
Metallhydrid-Speicherbehälter und seine Herstellung
Réservoir de stockage d'hydrure métallique et sa fabrication

(30) Priority: 16.08.2001 CN 11244226
(43) Date of publication of application: 26.02.2003
(73) Proprietor: Asia Pacific Fuel Cell Technologies, Ltd., Neihu, Taipei 114 (TW)
(72) Inventor: Ys Yang, Jefferson, Asia Pacific Fuel Cell Tec.Ltd, Neihu, Taipei 114 (TW); Kao, Mike Pen-Mu, Asia Pacific Fuel Cell Tec.Ltd, Neihu, Taipei 114 (TW)
(74) Representative: Goddar, Heinz J.

(56) References cited:
- EP-A- 0 995 944
- US-A- 4 446 111
- US-A1- 2003 019 765
- PATENT ABSTRACTS OF JAPAN vol. 013, no. 014 (M-784), 13 January 1989 (1989-01-13) & JP 63 225799 A (YASUO ODAI), 20 September 1988 (1988-09-20)

## Description

### Background of the Invention

### Field of the Invention

This invention is related to a metal hydride storage canister, particularly a canister for use with a hydrogen fuel cell. The canister enhances thermal conductivity and provides space required by the expansion of the metal hydride. This invention further discloses the manufacture of the storage canister.

### Description of the Related Art

With the rapid growth of human civilization the consumption of traditional energy sources, such as coal, oil and natural gas, increases rapidly. This results in serious pollution to the global environment and causes various environmental problems such as global warming and acid rain. It is now recognized that the existing natural energy resources are limited. Therefore, if the present rate of energy consumption continues, all existing natural energy sources will be exhausted in the near future. Accordingly, many developed countries are dedicated to the research and development of new and alternative energy sources. The fuel cell is one of the most important and reasonably priced energy sources. Compared with traditional internal combustion engines, the fuel cell has many advantages such as high-energy conversion efficiency, clean exhaust, low noise, and no consumption of traditional gasoline.

In brief, a fuel cell is an electrical power generation device powered by the electrochemical reaction of hydrogen and oxygen. Basically, the reaction is a reverse reaction of the electrolysis of water, which converts the chemical energy into electrical energy. The basic structure of a fuel cell, for example, a proton exchange membrane fuel cell, comprising a plurality of cell units. Each cell unit contains a proton exchange membrane (PEM) at the middle, with the two sides thereof provided with a layer of catalyst. Each of the two outsides of the catalyst is further provided with a gas diffusion layer (GDL). An anode plate and a cathode plate are further provided at the outermost sides adjacent to the GDL. After all of the above elements are combined together, a cell unit is formed.

For the practical application of a fuel cell, a plurality of the above cell units are stacked and serially connected to form a cell stack for providing sufficient power, The cell stack is positioned between two end plates provided at the longitudinal, opposing ends of the cell stack. A plurality of tie rods pass through a peripheral region of each end plate for positioning the cell stack between the two end plates.

While performing the aforesaid reverse reaction of the electrolysis of water, in order to convert the chemical energy into electrical energy, the cell stack must be maintained under a consistent pressure range. This ensures that the reverse reaction of the electrolysis of water is performed under the optimum pressure condition to enhance the conversion efficiency of the chemical energy into electrical energy.

One known measure of storing hydrogen is to use the so-called metal hydride. Metal hydride is able to discharge hydrogen at a pressure corresponding to the temperature that it experiences; the process of releasing hydrogen is an endothermic reaction. When the hydrogen stored within the metal hydride has been completely exhausted, pure hydrogen can be re-charged back to the metal hydride; the process of charging hydrogen is an exothermic reaction. The temperature that metal hydride experiences is positively proportional to the pressure of the hydrogen to be discharged from the metal hydride. Such a proportional relationship may vary among metal hydrides furnished by different suppliers.

Due to the highly combustive characteristic of hydrogen, an easy and convenient method for pre-storing hydrogen within a specific container, and for releasing hydrogen as required for performing the above reverse reaction, is needed. The commonly known storage container is mostly a metal container capable of sustaining a pre-determined pressure and temperature. The container is sealed after a pre-determined amount of metal hydride is loaded therein.

Since the volume of metal hydride increases 5 to 20% after being charged with hydrogen, excessive space must be reserved when loading the metal hydride into the container to provide the space required by expansion of the metal hydride. Expansion of the metal hydride will easily cause compaction of the metal hydride when it is placed within a mutual space in conventional containers. The exothermic reaction during the process of charging hydrogen may cause an increment in temperature thereby, reducing the rate of charging hydrogen, such that the process must rely on the container surface to release the thermal energy to reduce the temperature. On the contrary, the endothermic reaction during the process of discharging hydrogen also relies on the container surface to absorb heat to efficiently increase rate of heat transfer. The mechanism for enhancing the rate of heat transfer is essential because metal hydride has a relatively low thermal conductivity. Furthermore, an easy passageway is needed for guiding the hydrogen discharged from the metal hydride to an outlet of the container.

U.S. Publication No. 2003/0019765 teaches a metal hydride storage canister design, which is a corresponding patent application of the present invention. The metal hydride storage canister comprises a storage canister body, a wafer baffle stacked on the body for containing metal hydride of a pre-determined amount, and a tubing having a porous surface for securing the wafer baffle in the body and for guiding hydrogen discharged from the metal hydride to an outlet of the body.

A pressure vessel for use in hydrogen storage is disclosed in U.S. Patent No. 4,446,111. The pressure vessel comprises a tubular container which is traversed axially by a gas tube. The gas tube is provided with apertures filled with metal wool and closed by a compacted ceramic wool plug. The interior of the container is comparmentized by a plurality of bulk head like annular partitions each having a cylindrical inner flange and a cylindrical outer flange, whereby the inner flanges sit tightly on the gas tube and the outer flanges bear tightly against the inside wall of the tubular container.

In Japan Publication No. 63-225799, the reactor comprises a plurality of alloy layers for containing hydrogen absorption alloy powder. When the insertion gap of the heat transmission barrier wall is shortened and the hydrogen absorption alloy layer is made thin, the temperature gradient in the hydrogen absorption alloy layer increases to promote passing/receiving of thermal energy between the hydrogen absorption alloy layer and thermal medium flowing at the outside of the reaction tube, resulting in shortening of hydrogen absorption-discharge reaction time of a hydrogen absorption alloy reactor.

European Patent Application No. 0 995 944 A3 discloses a process for filling hydrogen into a hydrogen storage car tank. The hydrogen supply tank includes a number of disk-shaped alloy units carried on a central hydrogen access pipe. The alloy units are in close contact with each other. Each alloy unit comprises a disk-shaped and closed container with a power of metal hydride filled therein.

It is noted that these prior arts do not give considerations to gas diffusion, thermal conductivity, and providing adequate space required by expansion of the metal hydride upon charging of hydrogen. The interval between adjacent alloy layers has to be precisely calculated to provide sufficient space; otherwise, the expansion of metal hydride at adsorption of hydrogen will push the alloy layers outward and deform the tubing. It is needed to provide an enhanced hydrogen storage canister to overcome the drawbacks.

It should also be noted that aside from fuel cells, the metal hydride storage canister according to this invention could also be adapted in other applications, such as hydrogen driven pumps, and hydrogen driven air-conditioners.

### Brief Summary of the Invention

It is a primary objective of this invention to overcome the defects of conventional containers:
- to provide a storage canister capable of enhancing thermal conductivity,
- to reduce compactness among the metal hydride,
- to prevent cracks found in the metal hydride stack,
- to provide an easy passageway for guiding the hydrogen discharged from the metal hydride to an outlet of the canister.

This will effectively enhance the operative efficiency of the fuel cell.

The major technical content of this invention mainly uses a wafer baffle made of a thermally conductive material placed in a storage canister for containing metal hydride, and a plurality of porous tubings for securing the wafer baffle in the storage canister as well as for guiding hydrogen discharged from the metal hydride to an outlet of the storage canister. This invention further discloses the manufacture of the storage canister.

The structures and characteristics of this invention can be realized by referring to the appended drawings and explanations of the preferred embodiments.

### Brief Description of the Several Views of the Drawings

Fig. 1 is an exploded, perspective view of a metal hydride storage canister according to this invention;
Fig. 2 is a cross-sectional view illustrating the metal hydride storage canister of Fig. 1;
Fig. 3 is a perspective view of a wafer baffle; and
Fig. 4 is a cross-sectional view of a canister body.

### Detailed Description of the Invention

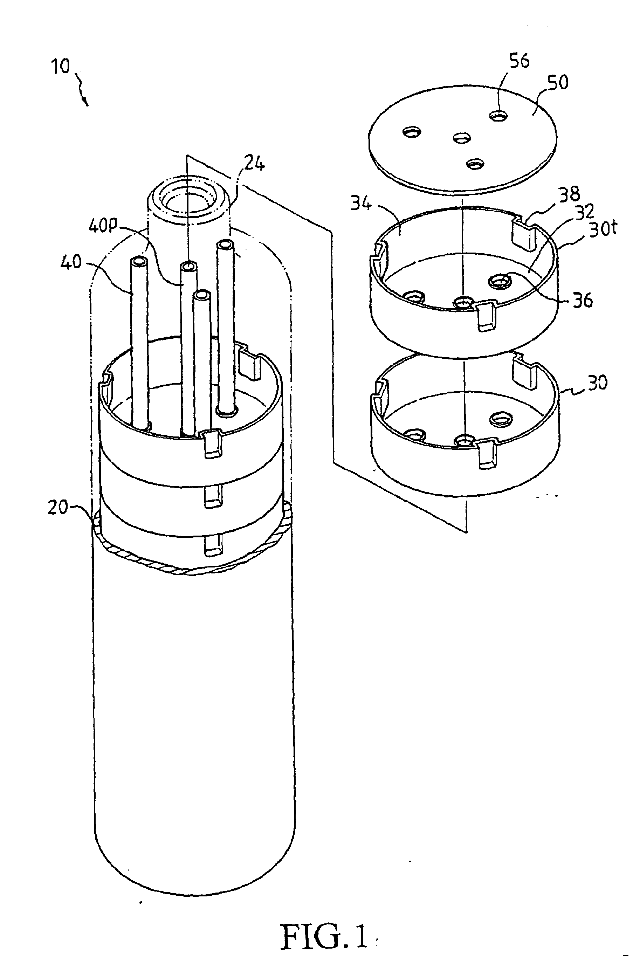

As illustrated in Fig. 1, the metal hydride storage canister 10 comprises: a storage canister body 20; a plurality of wafer baffles 30; a plurality of tubings 40; and a lid 50.

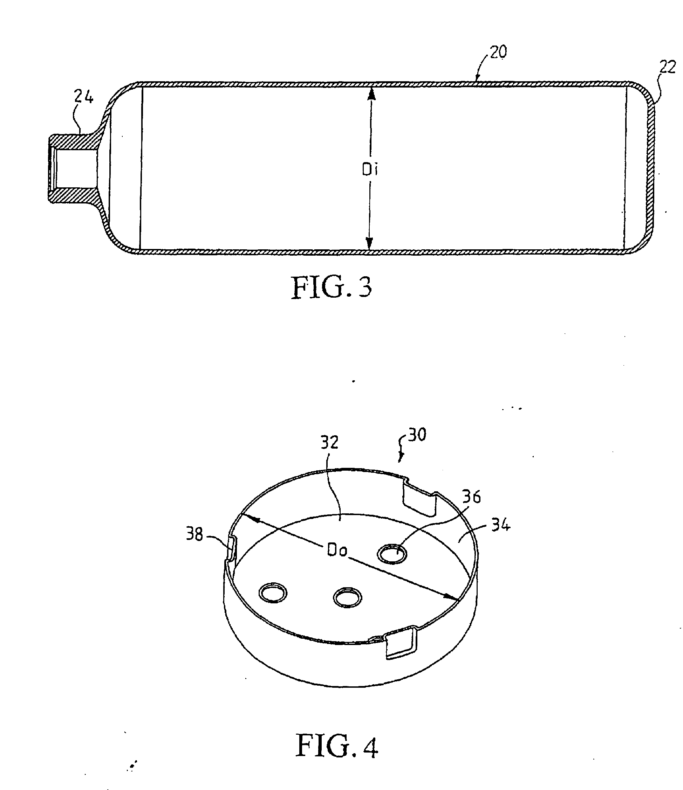

3 With reference to Fig.3, the canister body 20 has an inner diameter Di, a bottom 22, and an outlet 24 opposing the bottom 22.

With reference to Fig.4, the wafer baffles 30 are stacked in the canister body 20 for containing a pre-determined amount of metal hydride. Each wafer baffle 30 is made of a thermally conductive material and has a bottom face 32 and a peripheral wall 34 with an outer diameter Do, the peripheral wall substantially extending from a periphery of the bottom face 32 orthogonally. Each bottom face 32 of the wafer baffle 30 is formed with a plurality of apertures 36. As illustrated in Fig.4, the peripheral wall 34 of each wafer baffle 30 has an upper edge that is formed with at least one notch 38 for enhancing the support strength of the wafer baffle 30, and for preventing another wafer baffle 30 stacking over the present wafer baffle 30 from falling into the present wafer baffle 30. The outer diameter Do of the peripheral wall 34 is substantially equal to the inner diameter Di of the canister body 20.

The lid 50 is formed with a plurality of openings 56 at locations corresponding to where the apertures 36 of the bottom face 32 of each wafer baffle 30 are formed, and is stacked over a topmost wafer baffle 30t for keeping the metal hydride contained in the wafer baffle 30t within its desired location. The lid 50 is preferably a porous metal sintered lid made by sintering processes.

The tubings 40 in term pass through the openings 56 of the lid 50 and the apertures 36 formed on the bottom face 32 of the wafer baffles 30, for securing the wafer baffles 30 and the lid 50 in the canister body 20. At least one 40p of the tubings has a porous surface for guiding the hydrogen discharged from the metal hydride to the outlet 24 of the container body 20. The porous tubing 40p can be made of any material that can sustain high temperature and high pressure. Preferably, the porous tubing 40p is a porous metal sintered tubing made by sintering processes.

To facilitate the manufacturing of the metal hydride storage canister 10 of this invention, the canister body 20 is a preformed body having a substantially cylindrical configuration prior to forming. The preformed body is formed with an open end where the outlet 24 is located upon forming of the canister body. The preformed body has an inner diameter that is slightly greater than the outer diameter Do of the peripheral walls 34 of the wafer baffles 30.

While manufacturing the metal hydride storage canister 10, metal hydride that has yet to be charged with hydrogen is placed in each of the wafer baffles 30. Space should be reserved in each of the wafer baffles 30 to provide the space required by expansion of the metal hydride upon charging of hydrogen.

The wafer baffles 30 are then stacked over one another in such a manner that the corresponding apertures 36 at the bottom faces 32 of the wafer baffles 30 align with one another. If the material selected to make the wafer baffles 30 is of insufficient strength, the notches 38 formed at the upper edge of the peripheral wall 34 of each wafer baffle 30 are adapted to enhance its supportive strength to prevent another wafer baffle stacking over a lower wafer baffle from falling into the lower wafer baffle. The lid 50 is then stacked over the topmost wafer baffle 30t.

The tubings 40, 40p then pass through the openings 56 of the lid 50 and the apertures 36 formed on the bottom faces 32 of the wafer baffles 30 to prevent relative movement of the wafer baffles 30.

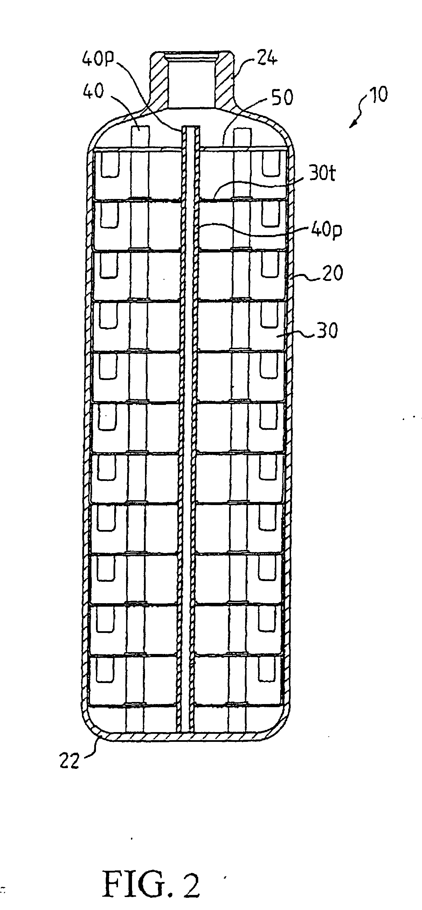

At this time, the stacked and secured wafer baffles 30 and lid 60 may be placed into the preformed body of the canister body 20 through the opening of the preformed body. The preformed body and its opening are then shrunk to the configuration of Fig. 2 through heat rolling.

Prior to using the metal hydride storage canister 10, fresh, pure hydrogen is guided to each wafer baffle 30 by the porous tubing 40p through the outlet 24 of the canister body 20, and thus charged to the metal hydride contained in each wafer baffle 30. When the hydrogen stored within the metal hydride has been completely exhausted, pure hydrogen can be re-charged back to the metal hydride in a similar manner.

Since the peripheral walls 34 of the wafer baffles 30 are in close contact with the canister body, and because the wafer baffles 30 are made of a thermally conductive material, it is ensured that thermal energy being applied to the canister is evenly distributed and applied to the metal hydride contained in the wafer baffles 30, thereby enhancing the rate of heat transfer, providing space for the even expansion of the metal hydride, and allowing the metal hydride stack to completely discharge the hydrogen charged therein. The porous tubing 40p of this invention further serves as an easy passageway for guiding the hydrogen discharged from the metal hydride to the outlet 24 of the container body 20, so as to effectively enhance the operative efficiency of the fuel cell.

This invention is related to a novel creation that makes a breakthrough to conventional art. Aforementioned explanations, however, are directed to the description of preferred embodiments according to this invention. Various changes and implementations can be made by those skilled in the art without departing from the technical concept of this invention. Since this invention is not limited to the specific details described in connection with the preferred embodiments, changes to certain features of the preferred embodiments without altering the overall basic function of the invention are contemplated within the scope of the appended claims.

### Sequence Listing

- Di: Inner diameter
- Do: Outer diameter
- 10: metal hydride storage canister
- 20: Canister body
- 22: Bottom
- 24: Outlet
- 30: Wafer baffle
- 305: Topmost wafer baffle
- 32: Bottom face
- 34: Peripheral wall
- 36: Aperture
- 38: Notch
- 40: Tubing
- 40p: Porous tubing
- 50: Lid
- 56: Opening

## Claims

1. A metal hydride storage canister (10), comprising
a storage canister body (20), having a predetermined inner diameter, the canister body (20) having a bottom (22) formed on one end thereof, and an outlet (24) formed on an opposing end, **characterized in that** the metal hydride storage canister (10) comprises:
a plurality of wafer baffles (30) movably disposed in stacked relationship in the canister body (20), each of the wafer baffles (30) being made of a thermally conductive material, each wafer baffle (30) having a bottom face (32) formed with a plurality of apertures (36) therein, a peripheral wall (34) with an outer diameter being substantially equal to the predetermined inner diameter of the canister body (20), and an open upper end, the peripheral wall (34) extending substantially orthogonally from a periphery of the bottom face (32) and having a plurality of depression notches (38) formed therein adjacent to the open upper end for preventing nesting of the stacked wafer baffles (30);
a lid (50) overlaying an uppermost one of the plurality of wafer baffles (30), the lid (50) having a plurality of aperture (56) formed therein in aligned relationship with the apertures (36) of the wafer baffles (30); and
a first tubing (40p), passing through the at least one aperture (36) of the bottom face (32) of the plurality of wafer baffles (30) and the at least one aperture (56) of the lid (50), the first tubing (40p) having a porous body and being in fluent communication with the outlet (24) of the canister body (20).

2. The metal hydride storage canister (10) according to Claim 1, wherein the first tubing (40p) is formed of a porous sintered metal composition.

3. The metal hydride storage canister (10) according to claim 1, further comprising at least one second tubing (40) passing through corresponding second apertures (36, 56) in each of the plurality of wafer baffles (30) and the lid (50), the at least one second tubing (40) having a porous body and being in fluid communication with the outlet (24) of the canister body (20).

4. The metal hydride storage canister (10) according to Claim 3, wherein the body of the second tubing (40) is formed of a porous sintered metal composition.

5. A method for manufacturing a metal hydride storage canister (10) according to one of claims 1 to 4 comprising the steps of:
a. performing a canister body (20) having an open end;
b. stacking a plurality of wafer baffles (30), each of which has at least one aperture (36) formed at a bottom (32) thereof and is contained with metal hydride;
c. passing at least one porous tubing (40, 40p), in term, through the at least one aperture (36) of each of the stacked wafer baffles (30);
d. placing the stacked wafer baffles (30) into the preformed canister body (20) through the open end thereof; and
e. making the inner diameter of the preformed canister body (20) approach the outer diameter of the wafer baffles (30), and shrinking the open end by heat rolling the preformed canister body (20) and the open end.

6. The method according to Claim 5, further comprising the step of placing a lid (50) over the stacked wafer baffles (30), before step e., of which the lid (50) is formed with at least one opening (56) at a location corresponding to where the at least one aperture (36) of the bottom face (32) of each of the wafer baffles (30) is formed.

## Patentansprüche

1. Metallhydrid-Speicherkanister (10) mit
einem Speicherkanisterkörper (20) mit einem vorbestimmten Innendurchmesser, wobei der Kanisterkörper (20) einen an dessen Ende gebildeten Boden (22) und einen an dessen gegenüberliegendem Ende gebildeten Auslass (24) hat, **dadurch gekennzeichnet, dass** der Metallhydrid-Speicherkanister aufweist:
eine Mehrzahl von Blechscheiben (30), die in gestapelter Anordnung im Kanisterkörper (20) beweglich angeordnet sind, wobei jede Blechscheibe (30) aus einem thermisch leitfähigen Material hergestellt ist, jede Blechscheibe (30) eine Bodenfläche (32) hat, die mit einer Mehrzahl von Öffnungen (36) gebildet ist, mit einer peripheren Wandung (34) mit einem Außendurchmesser, der im wesentlichen gleich dem vorbestimmten Innendurchmesser des Kanisterkörpers (20) ist, und einem offenen oberen Ende, wobei sich die periphere Wandung (34) im wesentlichen senkrecht von einer Peripherie der Bodenfläche (32) erstreckt und eine Mehrzahl von darin gebildeten eingesenkten Ausbuchtungen (38) hat, die dem oberen offenen Ende angrenzen, um ein Verschachteln der gestapelten Blechscheiben (30) zu verhindern;
einen Deckel (50), der die oberste der Mehrzahl von Blechscheiben (30) überdeckt, wobei der Deckel (50) eine Mehrzahl von darin gebildeten Öffnungen (56) hat, die in ausgerichteter Anordnungsbeziehung mit den Öffnungen (36) der Blechscheiben (30) sind; und
einem ersten Rohr (40p), das wenigstens durch eine Öffnung (36) an der Bodenfläche (32) der Mehrzahl von Blechscheiben (30) und die wenigstens eine Öffnung (56) des Deckels (50) tritt, wobei das erste Rohr (40) einen porösen Körper hat und in fließender Kommunikation mit dem Auslass (34) des Kanisterkörpers (20) ist.

2. Metallhydrid-Speicherkanister (10) nach Anspruch 1, wobei das erste Rohr (40p) aus einer porösen gesinterten Metallzusammensetzung gebildet ist.

3. Metallhydrid-Speicherkanister (10) nach Anspruch 1, weiter aufweisend wenigstens ein zweites Rohr (40), das durch korrespondierende zweite Öffnungen (36, 56) in jeder der Mehrzahl von Blechscheiben (30) und dem Deckel (50) tritt, wobei wenigstens ein zweites Rohr (40) einen porösen Körper hat und in fließender Kommunikation mit dem Auslass (24) des Kanisterkörpers (20) ist.

4. Metallhydrid-Speicherkanister (10) nach Anspruch 3, wobei der Körper des zweiten Rohrs (40) aus einer porösen gesinterten Metallzusammensetzung gebildet ist.

5. Verfahren zum Herstellen eines Metallhydrid-Speicherkanisters (10) nach einem der Ansprüche 1 bis 4, mit den Schritten:
a. Erarbeiten eines Kanisterkörpers (20) mit einem offenen Ende;
b. Stapeln einer Mehrzahl von Blechscheiben (30), wobei jedes wenigstens eine an deren Boden (32) gebildete Öffnung (36) und Metallhydrid enthält;
c. Durchführen wenigstens einen porösen Rohrs (40, 40p) in der Größe durch die wenigstens eine Öffnung (36) jeder Blechscheibe (30);
d. Anordnen der gestapelten Blechscheiben (30) in dem vorgefertigten Kanisterkörper (20) durch dessen offenes Ende; und
e. Annähern des Innendurchmessers des vorgefertigten Kanisterkörpers (20) an den Außendurchmesser der Blechscheiben (30) und Schrumpfen des offenen Endes durch Heißwalzen des vorgefertigten Kanisterkörpers (20) am offenen Ende.

6. Verfahren nach Anspruch 5, weiter den Schritt aufweisend: Anordnen eines Deckels (50) über den gestapelten Blechscheiben (30), vor Schritt e., von denen der Deckel (50) mit wenigstens einer Öffnung (56) an einem Ort korrespondierend gebildet ist, an dem die wenigstens eine Öffnung (36) an der Bodenfläche (32) jeder Blechscheibe (30) gebildet ist.

## Revendications

1. Cartouche de stockage d'un hybride métallique (10), comprenant
un corps de cartouche de stockage (20), ayant un diamètre intérieur prédéterminé, le corps de cartouche (20) ayant un fond (22) formé sur une extrémité de celui-ci, et une sortie (24) formée sur une extrémité opposée, **caractérisée en ce que** la cartouche de stockage d'un hybride métallique (10) comprend:
une pluralité de tranches déflectrices (30) disposées de façon amovible en une relation empilée dans le corps de cartouche (20), chacune des tranches déflectrices (30) étant réalisée en une matière thermiquement conductrice, chaque tranche déflectrice (30) ayant une face inférieure (32) comportant une pluralité d'ouvertures (36), une paroi périphérique (34) d'un diamètre extérieur sensiblement égal au diamètre intérieur prédéterminé du corps de cartouche (20), et une extrémité supérieure ouverte, la paroi périphérique (34) s'étendant sensiblement orthogonalement depuis une périphérie de la face inférieure (32) et comportant une pluralité d'encoches creuses (38) formées à proximité de l'extrémité supérieure ouverte pour empêcher l'emboîtement des tranches déflectrices empilées (30) ;
un couvercle (50) recouvrant la tranche la plus haute de la pluralité de tranches déflectrices (30), le couvercle (50) comportant une pluralité d'ouvertures (56) formées en alignement avec les ouvertures (36) des tranches déflectrices (30) ; et
un premier tube (40p), passant à travers l'au moins une ouverture (36) de la face inférieure (32) de la pluralité de tranches déflectrices (30) et l'au moins une ouverture (56) du couvercle (50), le premier tube (40p) ayant un corps poreux et étant en communication aisée avec la sortie (24) du corps de cartouche (20).

2. Cartouche de stockage d'un hybride métallique (10) selon la revendication 1, dans laquelle le premier tube (40p) est formé d'une composition métallique frittée poreuse.

3. Cartouche de stockage d'un hybride métallique (10) selon la revendication 1, comprenant en outre au moins un deuxième tube (40) passant à travers des deuxièmes ouvertures correspondantes (36, 56) dans chacune de la pluralité de tranches déflectrices (30) et le couvercle (50), l'au moins un deuxième tube (40) ayant un corps poreux et étant en communication fluide avec la sortie (24) du corps de cartouche (20).

4. Cartouche de stockage d'un hybride métallique (10) selon la revendication 3, dans laquelle le corps du deuxième tube (40) est formé d'une composition métallique frittée poreuse.

5. Procédé de fabrication d'une cartouche de stockage d'un hybride métallique (10) selon l'une quelconque des revendications 1 à 4, comprenant les étapes consistant à :
a. réaliser un corps de cartouche (20) ayant une extrémité ouverte ;
b. empiler une pluralité de tranches déflectrices (30), dont chacune a au moins une ouverture (36) formée au niveau d'un fond (32) de celle-ci et est contenue avec un hybride métallique ;
c. passer au moins un tube poreux (40, 40p), l'un après l'autre, à travers l'au moins une ouverture (36) de chacune des tranches déflectrices empilées (30) ;
d. placer les tranches déflectrices empilées (30) dans le corps de cartouche préformé (20) à travers l'extrémité ouverte de celui-ci ; et
e. faire en sorte que le diamètre intérieur du corps de cartouche préformé (20) avoisine le diamètre extérieur des tranches déflectrices (30), et rétrécir l'extrémité ouverte par laminage à chaud du corps de cartouche préformé (20) et de l'extrémité ouverte.

6. Procédé selon la revendication 5, comprenant en outre l'étape consistant à placer un couvercle (50) pardessus les tranches déflectrices empilées (30), avant l'étape e, le couvercle (50) étant formé avec au moins une ouverture (56) à une position correspondant à l'endroit où l'au moins une ouverture (36) de la face inférieure (32) de chacune des tranches déflectrices (30) est formée.
